# EUROPÄISCHE PATENTSCHRIFT

(11) **EP 1 386 709 B1**
(45) Veröffentlichungstag und Bekanntmachung des Hinweises auf die Patenterteilung: **15.03.2006**
(21) Anmeldenummer: 03013428.2
(22) Anmeldetag: 21.06.2003
(51) Int. Cl.: B29C 31/08

(54) **Verfahren und Vorrichtung zum Aufnehmen eines Plastifikates**
Method and apparatus for picking up a plastic strand
Procédé et appareil pour soulever un cordon de matière plastique

(30) Priorität: 22.07.2002 DE 10233299
(43) Veröffentlichungstag der Anmeldung: 04.02.2004
(73) Patentinhaber: Dieffenbacher GmbH + Co. KG, 75031 Eppingen (DE)
(72) Erfinder: Brüssel, Richard, 75056 Sulzfeld (DE)
(74) Vertreter: Hartdegen, Anton

(56) Entgegenhaltungen:
- EP-A- 0 396 941
- EP-A- 0 450 482
- EP-A- 0 588 361
- US-A- 4 015 872
- US-A- 4 750 605
- US-B1- 6 209 709
- PATENT ABSTRACTS OF JAPAN vol. 009, no. 313 (M-437), 10. Dezember 1985 (1985-12-10) & JP 60 149410 A (MATSUSHITA DENKO KK), 6. August 1985 (1985-08-06)

## Beschreibung

Die Erfindung betrifft ein Verfahren zum Aufnehmen eines Plastifikates, insbesondere klebrigen Plastifikates nach dem Oberbegriff des Anspruches 1 sowie eine Vorrichtung nach Anspruch 2 zur Durchführung des Verfahrens.

Die je nach Fasergehalt, Kunststoffzähigkeit und Plastifikatdicke mehr oder weniger lapprigen Plastifikate werden bisher automatisch mit Nadelgreifem gehandhabt. Die Nadeln stechen meist in die Oberfläche der Plastifikate senkrecht oder unter einem Winkel zur Oberfläche ein.
Bei der senkrechten Nadeltechnik hält sich das Plastifikat nur durch Reibkraft an der Nadel. Deshalb ist eine relativ große Anzahl von Nadeln erforderlich. Bei dem Einstechen winkelig zur Oberfläche wird meist auch paarweise zueinander schräg eingestochen. Hierbei wird ein formschlüssiges Halten der Plastifikate erreicht. Wenn dann diese Nadeln synchron zueinander wieder herausgezogen werden bleibt die Plastifikatposition zentriert erhalten.

Bei dieser Nadelgreifer-Handhabung der Plastifikate entstehen allerdings Markierungen an der Pressteiloberfläche Der Grund ist, beim Einstechen der Nadel in das Plastifikat muss klebriges Material verdrängt werden. Deshalb haftet an den meist kalten Nadeln etwas Kunststoff, welche für den nächsten Stechvorgang wieder entfernt werden muss, weil sonst die Stechkraft immer größer wird und immer mehr Material an den Erhebungen haften würde. Deshalb ist es üblich, dass diese Nadeln beim Zurückziehen mit Abstreifbuchsen gereinigt werden. Dabei fallen die anhaftenden Kunststoffreste auf die Plastifikatoberfläche. Diese Oberseite mit den abgekühlten Kunststoffresten bildet in der Regel auch die Sichtseite des Pressteils. Beim Pressvorgang bleiben diese abgekühlten Kunststoffreste auch auf der Pressteiloberseite erhalten, wo sie als oberflächenstörende Schlieren oder Punkte sichtbar sind.
Stand der Technik ist weiter, dass die Plastifikate spritzgegossen werden oder beim Pressen, meist beim Hinterpressen von Dekormaterialien, im Strangablegeverfahren verarbeitet werden. Unter diesem Verfahren versteht man, dass der Extruder oder Plastifizierer über die Kavität der Presse fährt und das aufgeschmolzene klebrige Material direkt auf der Kavität ablegt Das Handhaben des Materials ist damit zwar gelöst, aber es muss auch das relativ große Gewicht des Extruders bewegt werden und die Aufschmelzleistung ist durch den Ablegeprazeß reduziert.

Mit EP 0 396 941 A2 ist eine Einrichtung zur Verbesserung der Handhabung von Pressmassen aus Faserverbundwerkstoffen, insbesondere zur Ablage von klebrigen Harzmatten in Presswerkzeugen bekannt geworden. Diese Einrichtung zeichnet sich dadurch aus, dass ein Tragrechen gemeinsam mit einem Abstreifrechen am Vorderabschnitt eines Schwenkrahmens angebracht ist, der um eine Horizontalachse drehbar an einem zumindest in waagrechter Richtung verfahrbaren Schlitten abgestützt ist. Der Tragrechen in dieser Einrichtung ist so ausgeführt, dass möglichst schmale Auflageflächen (Zinken) für die Pressmassen vorhanden sind und dass ein gewisser Durchhang der Pressmasse zwischen den einzelnen Zinken auftreten kann. Zur Ablage werden die tragenden Zinken gegen einen Abstreifer verschoben und die Pressmasse fällt schließlich auf die Pressform. Bei dieser Einrichtung ist nur ein einseitiges Unterfahren von Pressmassen möglich und die zu manipulierenden Massen der beweglichen Teile sind wegen dem komplexen Aufbau sehr groß. Mit EP 0 588 361 A1 ist eine Einrichtung zum Laden von Kunststoff-Folienmaterial in die Form einer Formpresse bekannt geworden, die einen Förderer zum Zuführen einer Masse des Kunststoffmaterials in eine Ladestation angrenzend an die Form und eine Transfereinrichtung zum Überführen der Masse von der Ladestation in die Form umfasst. Die Vorrichtung zeichnet sich dadurch aus, dass der Förderer eine Anzahl von im Abstand liegenden, parallelen, waagrecht beweglichen Transportelementen, eine Anzahl von Hubelementen in der Ladestation, die vertikal beweglich in den Zwischenräumen zwischen den Transportelementen angeordnet sind zum Entfernen der Masse von den Transportelementen und Zurücklassen der Masse auf der Transfereinrichtung umfasst.

Auch hier findet sich der Nachteil, dass die Transfereinrichtung einen Abstreifer aufweist und somit durch ihren komplizierten und schweren Aufbau eine hohe zu manipulierende Masse aufweist. Daneben ist die Übergabe in der Ladestation geprägt von einem umständlichen Aufbau mit vielen anfälligen mechanischen Teilen und Steuerungen. Auch hier findet nur eine einseitige Be- und Entladung der Pressmassen statt und das Manipulierwerkzeug weist einen komplexen und schweren Aufbau auf.
Mit JP 60 149 410 A ist eine Vorrichtung bekannt geworden, mit der von einem Stapel bestehend aus mehreren Schichten übereinander liegenden Pressmassen die oberste Pressmasse abgehoben werden kann. Dazu wird die oberste Pressmasse einseitig mit einer Vorrichtung stark angehoben und anschließend von einer zweiten Vorrichtung vollständig von der gleichen Seite aus unterfahren. Durch das Unterfahren wird nur die oberste Pressmasse von dem Stapel gelöst Es wird hier nicht gezeigt, wie mit der Pressmasse weiter umgegangen wird, ob die unterfahrende Vorrichtung in der Lage ist die Pressmasse weiterzutransportieren oder ob sogar noch eine andere Vorrichtung vorgesehen sein muss, die anschließend die Pressmasse in eine Presse überführt.
Mit dem genannten Stand der Technik ist es nicht möglich die bereits angeführten Nachteile zu vermeiden.

Der Erfindung liegt die Aufgabe zugrunde ein Verfahren anzugeben und eine Vorrichtung zu schaffen, mit dem bzw. mit der insbesondere klebriges Plastifikat von einem Transportband so schonend aufnehmbar und in die Formpresse einbringbar und dort ablegbar ist, so dass keine oder nur geringe Markierungen am fertigen Pressteil auftreten und die zu bewegenden Massen während des Manipulierens der Pressmassen möglichst gering sind.

Die Lösung besteht für das Verfahren nach Anspruch 1 darin, dass das Plastifikat von einem oder mehreren an den beiden Längsrändem des Transportbandes elastisch aufsetzenden und durch Querbewegung zur Längsmittenachse sich zwischen dass Plastifikat und der Bandoberfläche des Transportbandes schiebenden elastischen Tragblechen der Vorrichtung aufgenommen wird.

Die Vorrichtung zur Durchführung des Verfahrens besteht nach Anspruch 2 darin, dass ein oder mehrere elastische Tragbleche je Längsseite zum Unterschieben unter das Plastifikat mittels einem Hubantrieb leicht elastisch an die Oberfläche des Transportbandes andrückbar und aufliegend zur Längsmittenachse (I-I) auf einer Querfahrschiene verfahrbar sind.

Mit dem Verfahren und der Vorrichtung gemäß der Erfindung wird eine wesentliche Qualitätsverbesserung, insbesondere der Oberflächen, der in einer Formpresse hergestellten Teile erreicht

Weitere vorteilhafte Maßnahmen und Ausgestaltungen des Gegenstandes der Erfindung gehen aus den Unteransprüchen und der folgenden Beschreibung mit der Zeichnung hervor.
Es zeigen:
- Figur 1: Die Vorrichtung zur Durchführung des Verfahrens in Seitenansicht in einer Anlage zur Herstellung von Fomrteilen,
- Figur 2: die Vorrichtung in Vorderansicht und Schnitt A-A nach Figur 1 und
- Figur 3: die Vorrichtung mit dem Plastifikat in einem Ausschnitt "B" aus Figur 1.

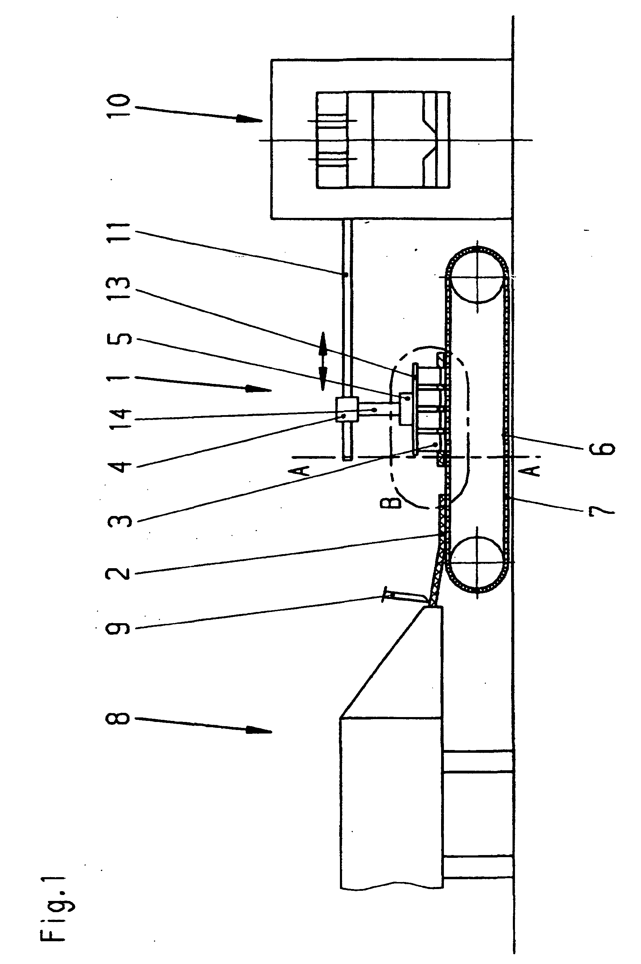

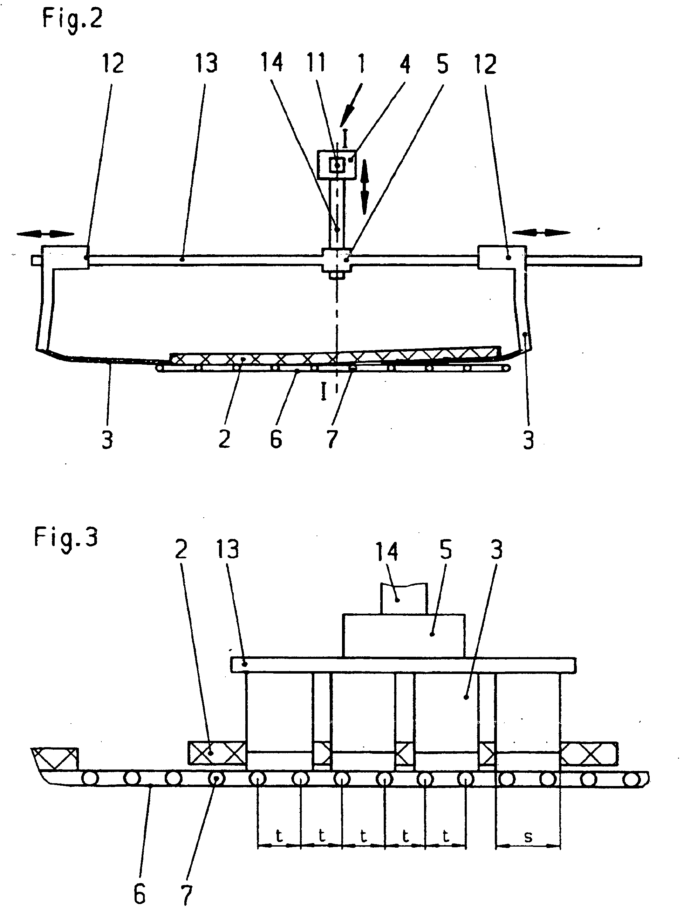

Die Zeichnung mit den Figuren 1 bis 3 zeigt die Vorrichtung 1 zur Durchführung des Verfahrens in einer gedachten Anlage zwischen einem Extruder 8 und einer Formpresse 10. Aus dem Extruder 8 kommt das Plastifikat 2 als Strang, wird von einem Schneidwerk 9 in vorgegebene Längen aufgeteilt und auf die Oberfläche eines als Drahtgerüstband ausgeführten endlosen Transportbandes 6 aufgelegt.
Die Plastifikate 2 werden dann mit einem oder mehreren elastisch verbiegbaren Tragblechen 3 aus Federstahl je Längsseite durch Unterschieben an den beiden Längsrändem vom Transportband 6 abgeschält und aufgenommen. Dafür sind die Tragbleche 3 über beiden Längsseiten des Transportbandes 6 an Querfahrantrieben 12 leicht schräg und verfahrbar angebracht. Die Querfahrantriebe 12 sind dabei auf der Querfahrschiene 12 zur Längsmittenachse I-I hin- und herschiebbar ausgeführt.
Wie in Figur 2, links von der Längsmittenachse I-I dargestellt, setzen die Tragbleche 3 dabei mittels des Hubantriebes 5 an der Hubspindel 14 abfahrend, elastisch auf der Oberfläche des Transportbandes 6 aufdrückend auf diesem auf. Durch eine Querfahrt der Querfahrtantriebe 12 zur Längsmittenachse I-I, wie in Figur 2 rechts dargestellt, schieben sich die Spitzen der Tragbleche 3 unter das Plastifikat 2, wobei das Plastifikat 2 von den elastisch verbiegbaren Tragblechen 3 aufgenommen wird.
Für den Transport des Plastifikates 2 in die Formpresse 10 ist die Vorrichtung 1 mit dem Fahrantrieb 4 auf einer Fahrschiene 11 verfahrbar ausgeführt. Diese Figur 3 zeigt in einem Ausschnitt "B" aus Figur 1 die Ausführung der Tragbleche 3 mit der Breite S, die größer sein muss als die Teilung t der Drähte 7 im Transportband 6. Dadurch, dass mit der Vorrichtung gemäß der Erfindung das Plastifikat 2 nicht wie bei den Nadeln verdrängt werden muss, sondern nur abgehoben wird, verschmutzen die Tragbleche 3 wesentlich weniger. Zudem ist das System von der Plastifikatdicke unabhängig, d.h. es können auch dünne Plastifikate 2 gehandhabt werden.

Die Reinigung der Tragbleche 3 kann im Querfahrantrieb 12 integriert sein, wobei durch einen geteilten Hub außerhalb der Kavität Plastifikatreste abgestreift werden. Um das Gewicht der Reinigungseinrichtung im Querfahrantrieb 12 zu sparen, bietet sich an, ihn zyklisch oder nach X-Zyklen in eine spezielle Reinigungsstation zu tauchen und die Tragbleche 3 dort zu reinigen.
Beim Unterschieben und Aufnehmen eines klebrigen Plastifikates 2 kann es vorkommen, dass es an den Tragblechen 3 partiell oder voll anklebt, auch wenn das Transportband 6 eine Teflon-Beschichtung aufweist. Zur Verhinderung des Anklebens ist vorgesehen die Oberflächen der Tragbleche 3 mit einer geeigneten Trennschicht wie Talkum oder Kreidepulver zu benetzen.

Durch wiederkehrendes Benetzen der vorhandenen Oberfläche des Transportbandes 6 mit Talkum oder anderen geeigneten Pulvern kann das Ankleben der Plastifikate 2 am Transportband 6 vermieden werden.
Als praktische Ausführung bietet sich an, das umlaufende Transportband mit einer Walzen-Bestreicheinheit mit Talkum zu benetzen.
Die das Plastifikat 2 untergreifenden Tragbleche 3 werden dafür zyklisch oder nach X-Zyklen mit Talkum benetzt.

Talkumpulver als Benetzwerkstoff bietet sich an, weil die hauptsächlichangewandten Plastifikate 2 schon mit Talkum verstärkt sind. Eine nur sehr geringe Oberflächenbenetzung reicht schon aus, um die Klebeneigung zu vermeiden. Damit sind die Teileoberflächen auch nur sehr gering, dass heißt nicht störend, beeinflusst.

### Bezugszeichenliste:

- 1.: Vorrichtung
- 2.: Plastifikat
- 3.: Tragblech
- 4.: Fahrantrieb
- 5.: Hubantrieb
- 6.: Transportband
- 7.: Draht
- 8.: Extruder
- 9.: Schneidwerk
- 10.: Formpresse
- 11.: Fahrschiene
- 12.: Querfahrantrieb
- 13.: Querfahrschiene
- 14.: Hubspindel

- A-A: Schnitt aus Figur 1
- I-I: Ausschnitt aus Figur 1
- B: Längsmittenachse in Figur 2
- S: Breite der Tragbleche
- t: Teilung der Drähte im Transportband

## Patentansprüche

1. Verfahren zum Aufnehmen, zum Transport und zum Ablegen in der Pressform einer Formpresse (10) eines von einem Extruder (8) auf einem Transportband (6) abgelegten Plastifikates (2), insbesondere eines klebrigen Plastifikates, mittels einer Vorrichtung (1), **dadurch gekennzeichnet, dass** das Pfastifikat (2) von einem oder mehreren an den beiden Längsrändem des Transportbandes (6) elastisch aufsetzenden und durch Querbewegung zur Längsmittenachse (I-I) sich zwischen dass Plastifikat (2) und der Bandoberfläche des Transportbandes (6) schiebenden elastischen Tragblechen (3) der Vorrichtung (1) aufgenommen wird.

2. Vorrichtung zum Aufnehmen, zum Transport und zum Ablegen in der Pressform einer Formpresse (10) eines von einem Extruder (8) auf einem Transportband (6) abgelegten Plastifikates (2), insbesondere eines klebrigen Plastifikates, zur Durchführung des Verfahrens nach Anspruch 1, **dadurch gekennzeichnet, dass** ein oder mehrere elastische Tragbleche (3) je Längsseite zum Unterschieben unter das Plastifikat (2) mittels einem Hubantrieb (5) leicht elastisch an die Oberfläche des Transportbandes (6) andrückbar und aufliegend zur Längsmittenachse (I-I) auf einer Querfahrschiene (13) verfahrbar sind.

3. Vorrichtung nach Anspruch 2, **gekennzeichnet durch** eine elastische Ausführung der Tragbleche (3) aus Federstahl.

4. Vorrichtung nach den Ansprüchen 2 und 3, **dadurch gekennzeichnet, dass** als Hubantrieb (5) eine Hubspindel (14) angeordnet ist.

5. Vorrichtung nach den Ansprüchen 2 bis 4, **gekennzeichnet durch** eine leicht schräge Anbringung der Tragbleche (3) an den Querfahrantrieben (12).

6. Vorrichtung nach den Ansprüchen 2 bis 5, **gekennzeichnet durch** die Anbringung einer Reinigungsvorrichtung für die Tragbleche (3) im Bereich der Querfahrantriebe (12).

7. Vorrichtung nach den Ansprüchen 2 bis 6, **dadurch gekennzeichnet, dass** der Transport des Plastifikates (2) mittels Fahrantrieb (4) auf einer Fahrschiene (11) durchführbar ist.

8. Vorrichtung nach einem oder mehreren der Ansprüche 2 bis 7, **dadurch gekennzeichnet, dass** eine spezielle Reinigungsvorrichtung für die Tragbleche (3) vorgesehen ist, bei der die Querfahrantriebe (12) mit den Tragblechen (3) zyklisch oder nach X-Zyklen einfahrbar ausgeführt sind.

9. Vorrichtung nach einem oder mehreren der Ansprüche 2 bis 8, **dadurch gekennzeichnet, dass** die Auflageflächen der Tragbleche (3) und/oder des Transportbandes (6) mit einer geeigneten Trennschicht versehen sind.

10. Vorrichtung nach einem oder mehreren der Ansprüche 2 bis 9, **dadurch gekennzeichnet, dass** eine Einrichtung für die wiederkehrende Benetzung der Auflageflächen der Tragbleche (3) und/oder des Transportbandes (6) mit Talkum angeordnet ist.

11. Vorrichtung nach einem oder mehreren der Ansprüche 2 bis 10, **dadurch gekennzeichnet, dass** zur Aufbringung eines Trennmittels auf das umlaufende Transportband (6) im Untertrum eine Walzen-Bestreicheinheit angeordnet ist.

12. Vorrichtung nach einem oder mehreren der Ansprüche 10 oder 11, **dadurch gekennzeichnet, dass** die Aufbringung eines Trennmittels oder von Talkum zyklisch oder nach X-Zyklen durchgeführt wird.

13. Vorrichtung nach einem oder mehreren der Ansprüche 2 bis 12, **dadurch gekennzeichnet, dass** die Breite (S) eines der Tragbleche (3) größer ausgeführt ist als die Teilung (t) der Drähte (7) im Transportband (6).

## Claims

1. A method for picking up, transporting and depositing in the press form of a molding press (10) a plastic strand (2), especially an adhesive plastic strand, laid by an extruder (8) on a conveyor belt (6) by means of an apparatus (1), **characterized in that** the plastic strand (2) is received by one or several elastic supporting plates (3) of the apparatus, which plates are placed elastically on both longitudinal edges of the conveyor belt (6) and slide by transversal movement relative to the longitudinal central axis (I-I) between the plastic strand (2) and the belt surface of the conveyor belt (6).

2. An apparatus for picking up, transporting and depositing in the press form of a molding press (10) a plastic strand (2), especially an adhesive plastic strand, laid by an extruder (8) on a conveyor belt (6), for performing the method according to claim 1, **characterized in that** one or several elastic supporting plates (3) can be pressed in a slightly elastic manner against the surface of the conveyor belt (6) at each longitudinal side for sliding beneath the plastic strand (2) by means of a lifting drive (5) and, resting on the same, can be displaced on a traversing rail (13) relative to the longitudinal central axis (I-I).

3. An apparatus according to claim 2, **characterized by** an elastic configuration of the supporting plates (3) made of spring steel.

4. An apparatus according to claims 2 and 3, **characterized in that** a lifting spindle (14) is arranged as a lifting drive (5).

5. An apparatus according to the claims 2 to 4, **characterized by** a slightly inclined attachment of the supporting plates (3) to the traversing drives (12).

6. An apparatus according to the claims 2 to 5, **characterized by** the attachment of a cleaning apparatus for the supporting plates (3) in the region of the traversing drives (12).

7. An apparatus according to the claims 2 to 6, **characterized in that** the transport of the plastic strand (2) can be performed by means of a traction drive (4) on a running rail (11).

8. An apparatus according to one or several of the claims 2 to 7, **characterized in that** a special cleaning apparatus is provided for the supporting plates (3) in which the traversing drives (12) are configured in a retractable manner with the supporting plates (3) in a cyclic fashion or after X cycles.

9. An apparatus according to one or several claims 2 to 8, **characterized in that** the bearing surfaces of the supporting plates (3) and/or the conveyor belt (6) are provided with a suitable parting layer.

10. An apparatus according to one of the claims 2 to 9, **characterized in that** a device is arranged for the repeated wetting of the bearing surfaces of the supporting plates (3) and/or the conveyor belt (6) with talcum.

11. An apparatus according to one or several of the claims 2 to 10, **characterized in that** a roller brushing unit is arranged in the lower conveyor belt strand for applying a parting agent onto the revolving conveyor belt (6).

12. An apparatus according to one or several claims 10 to 11, **characterized in that** the application of a parting agent or talcum is performed in a cyclic fashion or after X cycles.

13. An apparatus according to one or several of the claims 2 to 12, **characterized in that** the width (S) of one of the supporting plates (3) is provided with a larger configuration than the division (t) of the wires (7) in the conveyor belt (6).

## Revendications

1. Procédé pour soulever, transporter et déposer dans le moule de pressage d'une presse à mouler (10) un cordon de matière plastique (2) déposé par une extrudeuse (8) sur une bande transporteuse (6), en particulier un cordon de matière plastique collant, au moyen d'un dispositif (1), **caractérisé en ce que** le cordon de matière plastique (2) est reçu par une ou plusieurs tôles de support (3) du dispositif (1) qui s'appuient de manière élastique sur les deux bords longitudinaux de la bande transporteuse (6) et s'insèrent par un déplacement transversal par rapport à l'axe longitudinal médian (I-I) entre le cordon de matière plastique (2) et la surface de la bande transporteuse (6).

2. Dispositif pour soulever, transporter et déposer dans le moule de pressage d'une presse à mouler (10) un cordon de matière plastique (2) déposé par une extrudeuse (8) sur une bande transporteuse (6), en particulier un cordon de matière plastique collant, pour la mise en oeuvre du procédé selon la revendication 1, **caractérisé en ce qu'**une ou plusieurs tôles de support (3) élastiques pour chaque côté longitudinal peuvent être pressées de façon légèrement élastique sur la surface de la bande transporteuse (6) au moyen d'un entraînement de poussée (5) pour passer sous le cordon de matière plastique (2) et peuvent être déplacées horizontalement par rapport à l'axe longitudinal médian (I-I) sur un rail de déplacement transversal (13).

3. Dispositif selon la revendication 2, **caractérisé en ce que** les tôles de support (3) sont construites de façon élastique en acier à ressorts.

4. Dispositif selon les revendications 2 et 3, **caractérisé en ce qu'**une tige de poussée (14) est disposée pour servir d'entraînement de poussée (5).

5. Dispositif selon les revendications 2 à 4, **caractérisé en ce que** les tôles de support (3) sont disposées de manière légèrement oblique sur les entraînements de déplacement transversal (12).

6. Dispositif selon les revendications 2 à 5, **caractérisé en ce qu'**un dispositif de nettoyage des tôles de support (3) est disposé au niveau des entraînements de déplacement transversal (12).

7. Dispositif selon les revendications 2 à 6, **caractérisé en ce que** le transport du cordon de matière plastique (2) peut être réalisé au moyen d'un entraînement de déplacement (4) réalisé sur un rail de déplacement (11).

8. Dispositif selon une ou plusieurs des revendications 2 à 7, **caractérisé en ce qu'**il est prévu un dispositif de nettoyage spécial pour les tôles de support (3), dans lequel les entraînements de déplacement transversal (12) peuvent être rétractés avec les tôles de support (3) de manière cyclique ou après X cycles.

9. Dispositif selon une ou plusieurs des revendications 2 à 8, **caractérisé en ce que** les surfaces d'appui des tôles de support (3) et/ou de la bande transporteuse (6) sont dotées d'une couche de séparation adéquate.

10. Dispositif selon une ou plusieurs des revendications 2 à 9, **caractérisé en ce qu'**il est prévu un dispositif pour l'application répétitive de talc sur les surfaces d'appui des tôles de support (3) et/ou de la bande transporteuse (6).

11. Dispositif selon une ou plusieurs des revendications 2 à 10, **caractérisé en ce qu'**il est prévu pour appliquer un produit de séparation sur la bande transporteuse (6) continue une unité d'application à rouleaux disposée dans le brin inférieur

12. Dispositif selon une ou plusieurs des revendications 10 ou 11, **caractérisé en ce que** l'application d'un agent de séparation ou de talc est réalisée de manière cyclique ou après X cycles.

13. Dispositif selon une ou plusieurs des revendications 2 à 12, **caractérisé en ce que** la largeur (S) de l'une des tôles de support (3) est plus grande que l'espacement (t) des fils métalliques (7) dans la bande transporteuse (6).
